# EUROPEAN PATENT APPLICATION

(11) **EP 1 107 108 A1**
(43) Date of publication of application: **13.06.2001**
(21) Application number: 99124507.7
(22) Date of filing: 09.12.1999
(51) Int. Cl.: G06F 9/00, H04L 12/24

(54) **System and method for managing the configuration of hierarchically networked data processing devices**

(71) Applicant: Hewlett-Packard Company, A Delaware Corporation, Palo Alto, CA 94304 (US)
(72) Inventor: Mayer, Jürgen, 71083 Herrenberg (DE)
(74) Representative: Lippich, Wolfgang, Dipl.-Pys., Dr.rer.nat.

(57) **Abstract**

Described is an IT network (1) comprising distributed managers (2) and agents (3) which are arranged hierarchically in correspondence with an underlying likewise hierarchically arranged IT environment. Further a distributed database (5), or respective parts thereof, is provided for each manager (2) for storing information (6) about the configuration of the IT devices (4). For each IT device (4), an agent (3) is provided for retrieving the configuration information (6) for that IT device (4) from the database (5).The managers (2) and agents (3) use the computing power of the entire managed IT environment, whereby the managers (2) are implemented on IT servers (7) and the agents (3) are implemented on their corresponding IT devices (4). The agents (3) comprise intelligent behaviour insofar as they determine any necessary changes in the configuration of an IT device (4) being arranged at the same network hierarchy level or below that level independently on their own.

## Description

### BACKGROUND OF THE INVENTION

The present invention relates generally to data processing networks where data processing devices comprising data processing resources are arranged distributedly within an hierarchical data processing network infrastructure. More particularly, the invention relates to managing the configuration, particularly configuration changes, of the data processing devices or the respective data processing resources.

Large computer networks are typically dynamic with continual requirements for addition and deletion of equipment, updating of software, and detection and analysis of problems. Therefore management tools are required for meeting the necessary configuration of the resources connected to such a network. There are numerous standards organizations which are attempting to standardize computer networking. The international organization for standardization (ISO) has provided a general reference framework called the Open System Interconnection (OSI) model. The OSI model for a network management protocol is called Common Management Information Protocol (CMIP). CMIP is a common network management protocol only in Europe. In the United States, a more common network management protocol is a related variation of CMIP called the Simple Network Management Protocol (SNMP).

In the SNMP Network Management Terminology, a network management system contains at least one Network Management Station (NMS), several managed nodes, each node containing an agent, and a network management protocol which is used by the management station and the agents to exchange management information. A user can obtain data and alter data on the network by using network management software on the NMS to communicate with agent software in the managed nodes. The SNMP defines a structure for a management database (a collection of objects) called the Management Information Base (MIB). Objects in a MIB have names (Object Identifiers) and data structures (Object Types).
Information is retrieved from an agent by sending a SNMP GET or GET-NEXT request with an object identification as a parameter. Data associated with an object can be altered by sending a SNMP SET request to the agent with the object identification as one parameter and the data as another parameter. An object which can be written to is called a "setable" object.

The above mentioned network management standards and other known network management approaches do not facilitate the management of network devices or common information technology resources which are connected to a network.

It is noteworthy that besides these computer networks, there exist other fields of information technology (IT) where IT resources are widely distributed over a network. Only exemplarily reference is made to clients connected to the Internet or a proprietary Intranet, where the clients can be web browsers which can also be configured remotely. It is understood that all these IT fields are principally addressed by the present invention.

A network management service for facilitating the management of network devices which utilizes network management applications referred to as "agents" is described in WO 99/10808. A network of computer systems is therein described, where a network management agent can interrogate and manipulate a client computer independent of a present type of operating system. In particular, the agent may initialize a network management service in order to automatically transfer a new or updated operating system to a client computer or to replace an operating system on a client computer within the network that has become inoperative.

WO 99/10808 further discloses an agent discovery service which enables a client to discover remote agents, a network management service which allows for communication with remote agents, a file transfer service which enables to transfer files to and from remote computers, and a remote execution service in order to remotely initiate local execution of applications on a client. The process of transferring files from a client to a server is initiated by creating a request at the client and sending that request to the server using the file transfer service. Instead of transferring the file itself, a temporary upload file is created. Updating of an operating system is basically provided by a remote execution service which is used to initiate remote execution of an application, as well as remotely initiating a local execution of an application on a client's site. The remote execution service particularly checks for the presence of an executable file described in a data field and, if present, causes the file to be executed.

The drawback of the prementioned network management approach is that it does not provide for configuration of personal computers connected to a network in order to meet specific needs of the desktop users. Such configuration embraces tasks such as library and configuration management, version control, resource security, network control, data storage management, job scheduling, resource monitoring and reporting, and the like.

Thereupon, the revolutionary strides in hardware and software technology and in the human-to-computer interface have made an enormous range of different application programs available for desktop use on personal computers. Moreover, desktop computers have become so easy to operate that users have come to rely upon them even abroad for specialized tasks such as word processing, spreadsheet analysis and personal information management. The proliferation of application programs for desktop computers and the wide usage of computers in vast networks continues to make the job of managing networks evermore challenging.

An according method of managing resources in a network of distributed computers including an hierarchical resource information structure is disclosed in US-Patent 5,581,764. The subject matter of that patent is mainly addressing the drawback of earlier methods for managing such networks where lists of resources are maintained and utilized in order to automate the creation of a so-called "need" list. Further lists designated as "already have" (AH) lists have to be created and be saved for each desktop in earlier systems. The earlier process of configuring a desktop computer involved determining what resources the desktop already has, determining what resources the desktop should have (SH) and based on a comparison of the AH and SH resources, producing the need list that indicates what resources the desktop must add, delete or update.

The drawback with the type of lists described above is that the addition, deletion and updating of desktop resources involved comparing entire SH lists with entire AH lists for a large number of desktops which involved large network transport overhead.

Another prior art approach to simplify the management of large numbers of desktops and resources therefore has been to group desktop computers together to reduce the number of those lists. One difficulty with automating the SH list generation process has been that different desktops can have different hardware and software platforms. Another problem with the use of structured SH lists is that the desktop platform may change the resources identified in a SH list and thus may be inappropriate in that case. Similarly, the resource policies applicable to a desktop computer user could also change.

In the end of all these drawbacks, the subject matter of the above US-Patent 764 therefore proposes an improved and automated configuration process that permits dynamic reconfiguration of a desktop based upon policy changes and desktop technology configuration changes. Furthermore an allegedly improved process of comparing SH list with AH lists is therein described which allows for determining what resources must be added, deleted or updated on a desktop computer. The process particularly provides for dynamic linkage substitution which can be used to facilitate the resolution of an SH list for an individual distributed computer from a generalized SH list scheme so as to meet the current needs of an individual distributed computer.

Further, the above approach provides in a computer network respective AH structural data that are indicative of the linkages among AH information units in the AH information structure hierarchy. Comparing respective AH structural data with respective SH structural data allows for identification of portions of the AH information structure that differ from corresponding portions of the SH information structure, the so-called "fractional differencing". Hereby the differencing process is used to locate differences between SH lists or objects and AH lists or objects for the individual distributed computers. The differences between SH lists and AH lists for the individual distributed computers are used to determine what items must be compared in order to update individual desktops. The mentioned AH structural data that are indicative of the linkages among AH information units in the AH information structure hierarchy, are generated by linking the plurality of AH information units in a respective AH information structure in which AH information units are linked in a multi-level hierarchy that corresponds to a respective network computer and that identifies resources that such network computer already has.

The list scheme and dynamic linkage substitution mechanism of the above prior art approach therefore advantageously allows for determining resources of a desktop needs without having to scan for every file that has been changed, the so-called "fractional scheme", and a corresponding configuration change detection. But the approach is rather complex and thus difficult and expensive to implement.

### SUMMARY OF THE INVENTION

It is an object of the invention to provide a system and a method for managing the configuration of data processing devices arranged within a predescribed data processing network.

A further object is to provide such a system and a method being less complex compared with the known approaches.

It is still another object to provide such a system and method which can be implemented with lower technical requirements and cost efforts than the prior art.

The objects are solved by the independent claims. Preferred embodiments are given by the dependent claims.

In accordance with the invention, the configuration of the data processing devices arranged hierarchically within the data processing network is handled by means of managed elements, whereby the configuration information for the managed elements of the different data processing devices is provided in a distributed database. Managing means are provided which are arranged distributedly within the data processing network for handling the configuration, particularly configuration changes, of the managed elements, whereby utilizing configuration information for the managed elements. In particular, the database means are arranged distributedly in accordance with the managing means. Further, agent means are provided which are arranged distributedly in accordance with the data processing devices and which serve for retrieving the configuration information for the respective data processing devices, particularly of the corresponding managed elements, from the database. In other words, the agent means is (are) a mediator between the real IT world of data processing devices, particularly their configuration, and the corresponding database entries representing that real world.

According to an embodiment, the agent means also serve for building up a configuration list for the managed elements which enables to determine any configuration changes of the managed elements. In particular, a data model is provided where the data processing devices and/or resources are advantageously described in accordance with the hierarchical network infrastructure, e.g. tree structure, in order to allow for an easy navigation through the entire data processing network environment.

According to another embodiment, the data model of the data processing devices and/or resources includes information about each data processing devices and/or resource, the site hierarchy of each of these devices and/or resources, the managed elements for each of these devices and/or resources, and the configuration of each managed element. Using such a database driven approach, the user is capable to get a view of his local data processing environment just by querying information out of the database. Without such a database he had to draw pictures and had to access systems remotely to get all required information.

The distributed database approach together with the intelligence of the managers allow for particular scalability of the entire managing system approach. Further it enables a simplified management of the configuration of the devices and/or resources, particularly a simplified configuration change management.

Use of a relational database, according to a further embodiment, has the advantage that proven storage technologies are used and a powerful query mechanism enables a performance access to the stored information.

In contrast to the above described known approaches, the managing concept of the present invention advantageously can use the computing power of the entire managed network environment to determine the changes by using distributed intelligent agents. The managing means check whether the task can be conducted at local agents or whether the task has to be delegated to a next level in the network hierarchy.

Each agent advantageously can have a local management storage that holds the information about the current configuration of the managed elements in a data processing resource e.g. a computer system which is assigned to that agent.

The agent means can perform a delta detection based on the managed elements that represent the smallest managed unit under the concept according to the invention. It is emphasized hereby that typical managed elements are an entire software package, a printer or a user. But the managed elements are not used to represent individual files. It is emphasized that the data processing resources, accordingly, can be any software, hardware, data files, users or user profiles, i.e. all data processing elements which can principally be managed.

A current list of the managed elements of a particular data processing resource can be built-up by retrieving the corresponding elements from the database. The configuration information can be including attributes for each of the managed elements wherein the detection of configuration changes is accomplished advantageously by comparing solely the attributes of each of the managed elements in accordance with said delta detection method.

Beyond the above mentioned advantages vis-à-vis the prior art, the proposed database structure allows for easily defining the desired state of a managed element. Thus standard configurations for identical resources by means of model templates can be defined which further allows for mass operations. By means of the tags a number of configuration changes can also be easily collected.

As part of the invention, also a method for conducting configuration changes is proposed with a two-step process with a first recording or planning step where change definitions are only planned and optionally presented as planned state, and a second independent step where the planned configuration changes are executed. This process particularly allows for performing virtual configuration changes, e.g. by use of different models for the managed elements, whereby the configuration changes are restorable. It is noteworthy hereby that the proposed database structure does not allow for discarding entries of current states of a configuration whereby a new configuration is always entered by means of a new entry.

The proposed method allows for at least three types of changes which can advantageously be handled:
1. changes of the underlying models for the managed elements e.g. different versions of it;
2. configuration changes of a particular managed element;
3. new types of managed elements.

Further, the method enables differential targeting via categories like groups, systems, sites, etc. Thereupon mass operations and related templates based on reference systems and predefined configuration sets can be utilized.

Other objects and many of the advantages of the present invention will be readily appreciated and become better understood by reference to the following detailed description when considered in connection with the accompanied drawings.

### BRIEF DESCRIPTION OF THE DRAWINGS

- Fig. 1: is an hierarchical arrangement of distributed agents and managers according to the invention;
- Fig. 2: is a block diagram illustrating a delta detection mechanism according to the invention;
- Fig. 3: is a schematic view of an IT (data processing) environment showing the principle of managed elements according to the invention;
- Fig. 4: are possible configuration states of a managed element according to the invention;
- Fig. 5: is an exemplary process for installing software on an IT resource connected to an IT network environment, in accordance with the invention;
- Fig. 6: is an embodiment of a database containing the configuration of managed elements, in accordance with the invention;
- Fig. 7: is a virtual (layer) view of an IT environment for supporting management of the configuration of IT resources according to the configuration states shown in Fig. 4;
- Fig. 8: is a schematic illustration of the relationship between systems, elements and parameters of elements according to the invention;
- Fig. 9: is a block diagram showing an order management for distributing software within an IT environment, in accordance with the invention;
- Fig. 10: is an embodiment of the database where configuration information is represented by configuration change tags;

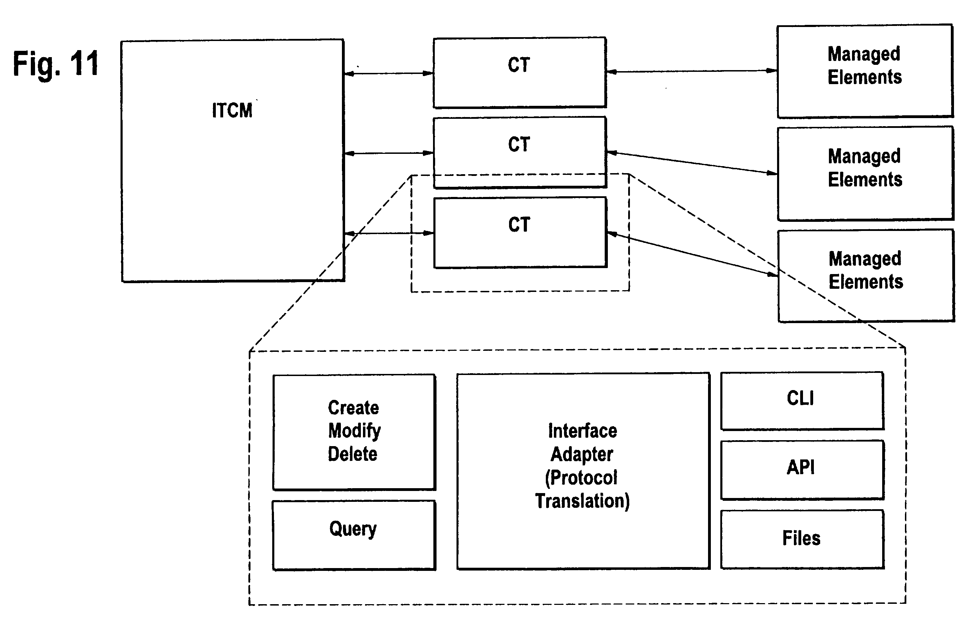

- Fig. 11: is an exemplary configuration tool(s) according to the invention;
- Fig. 12: are schematic set theory diagrams which illustrate (configuration) assignment and deassignment processes according to the invention;
- Fig. 13: are schematic table views of exemplary assignment processes using different configuration sets, in accordance with the invention; and
- Fig. 14: is a schematic illustration of an exemplary configuration history, corresponding with the states depicted in Fig. 4 and in accordance with the invention.

### DETAILED DESCRIPTION OF A PREFERRED EMBODIMENT

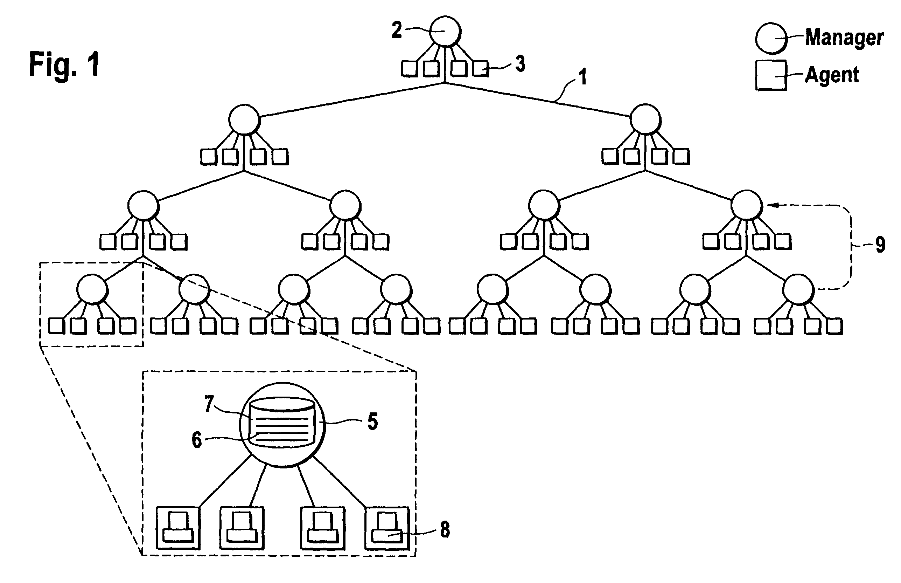

Fig. 1 shows an IT network 1 comprising an arrangement of distributed managers 2 and agents 3 in accordance with the invention which are arranged hierarchically in correspondence with an underlying likewise hierarchically arranged IT environment (not shown), i.e. in the present embodiment the network 1 of interconnected IT devices, exemplarily computer hardware (not shown). Further a distributed database 5, or respective parts thereof, is (are) provided for each manager 2 for storing information 6 about the configuration of the IT devices 4. For each IT device 4, an agent 3 is provided for retrieving the configuration information 6 for that IT device 4 from the database 5.

It is noteworthy that the IT devices 4, in principle, can also represent software (IT) resources like Web Browsers or any other intercommunication software which are interconnected via large scale networks like the Internet or proprietary intranets.

In this embodiment, the managers 2 and agents 3 use the computing power of the entire managed IT environment, whereby the managers 2 be implemented on IT servers 7 and the agents 3 be implemented on their corresponding IT devices 4. The agents 3 comprise intelligent behaviour insofar as they determine any necessary changes in the configuration of an IT device (or resource) 4 being arranged at the same network hierarchy level or below that level independently on their own. The underlying process mechanism will be described in more detail in the following.

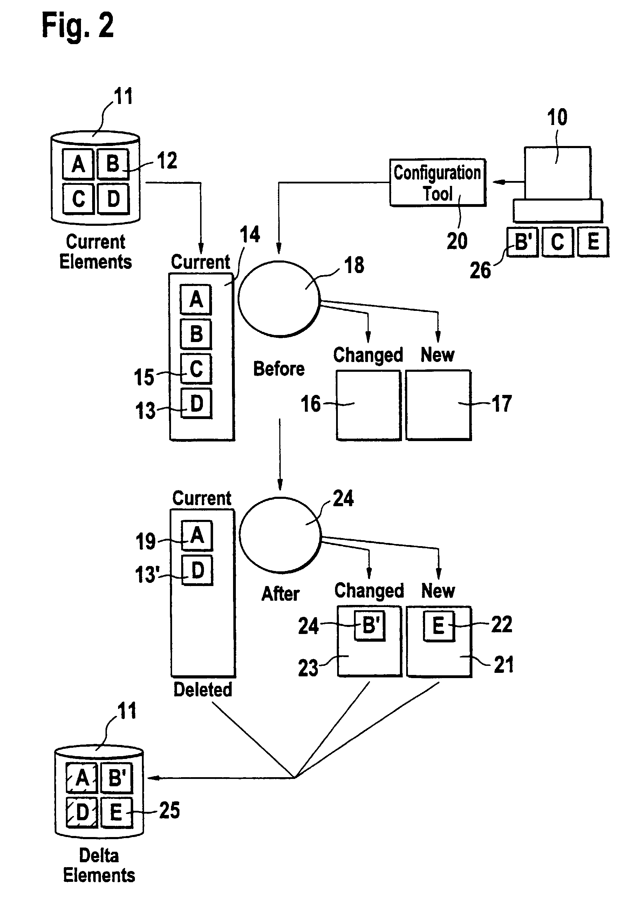

An exemplary mechanism for handling configuration changes according to the invention is illustrated now referring to Fig. 2. The current configuration of an IT device, namely a personal computer 10, is stored - besides configuration information related to other IT devices on the particular network hierarchy level or beyond that level - in a database 11 by means of managed elements (A-D) 12. The configuration information for the managed elements 16 of all IT resources is stored in a database 19 which is distributedly arranged within the entire network.

As it can be gathered from Fig. 1, each manager 2 at first checks whether it can do some task at one or more of the local agents 8 or whether the task must be delegated 9 to a next level in the network hierarchy 1. The necessary communication between different agents 3 is accomplished by an own OS independent data transfer mechanism, based on TCP/IP sockets.

Now referring back to Fig. 2, on the agent level, an agent responsible for the underlying IT device 10 performs a delta detection based on the managed elements 12 that represent the smallest managed unit of the data processing resources installed on the IT device 10. Typical managed elements 12 are an entire (installed) software package, a printer, a user, or any other configurable parts in an IT environment. They are not used to represent individual files. Each agent comprises a local configuration management storage 13 that holds the information about the current configuration 14 of the managed elements 12 for the IT device 10. In order to perform delta detection, so-called configuration tools 20 are utilized to retrieve the current configuration 14 of a respective managed element 12.
Configuration tools (CT) provide an abstract management interface on which the configuration and change management functionality of IT Configuration Management (ITCM) is based on. CTs provide all methods required to monitor and configure managed elements. Each category of managed element is associated with a configuration tool. Configuration tools support methods to manipulate elements (create, modify and delete) and to retrieve (query) elements of the associated type. CT's provide a protocol translation between an ITCM standard protocol and an element specific native protocol.

First of all, a current element list 15 is built-up by retrieving the elements 12 from the database 11. As a second step, the configuration tools are task to query the elements on the managed system 26. At this point, a comparison 18 is done on the elements coming from the configuration tools 26 and the current elements retrieved from the database 15. The following actions are triggered based on the respective result of that comparison:
Same attributes
   → Remove the element from the current element list 13
Different attributes
   → Put the element on the change element list 17 and delete the element from the current list 13
Element not in element list
   → Put the element on the new element list 16

Once all elements 15 and 26 are processed 24, the current element list 13' contains the deleted elements 19, the new list 21 the new ones 22, and the change list 23 the changed ones 27. These lists 13', 21, 23 are then placed back into the database 11 as a 'delta' 25.

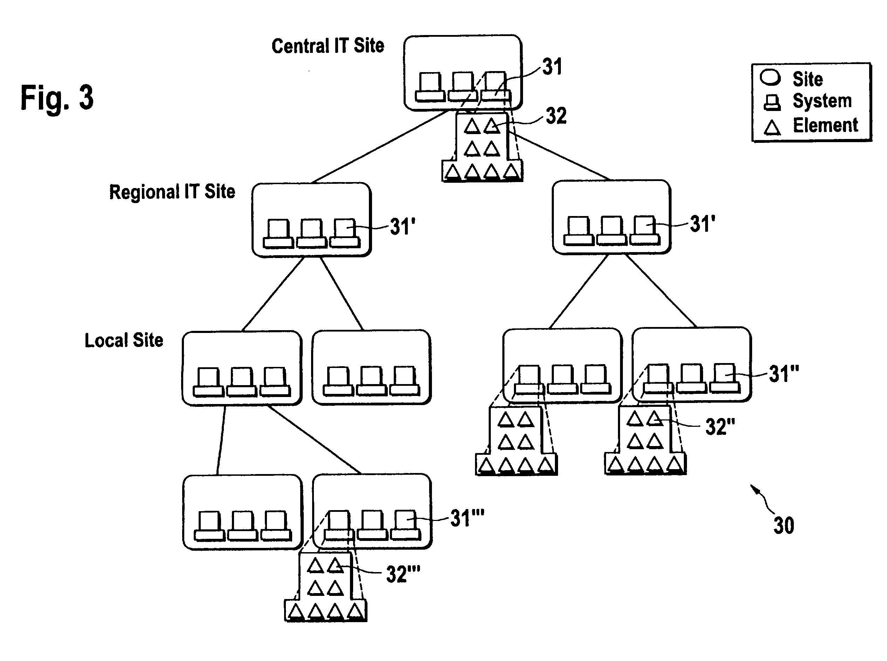

The following Fig. 3 which is a schematic view of an IT environment 30 comprising IT devices 31, 31', 31", 31"' serves to illustrate the principle of managed elements 32, 32", 32"'. ITCM models a managed system by elements. A system is nothing else than a container for parameterized elements. The concrete parameter values describe the system and its component.

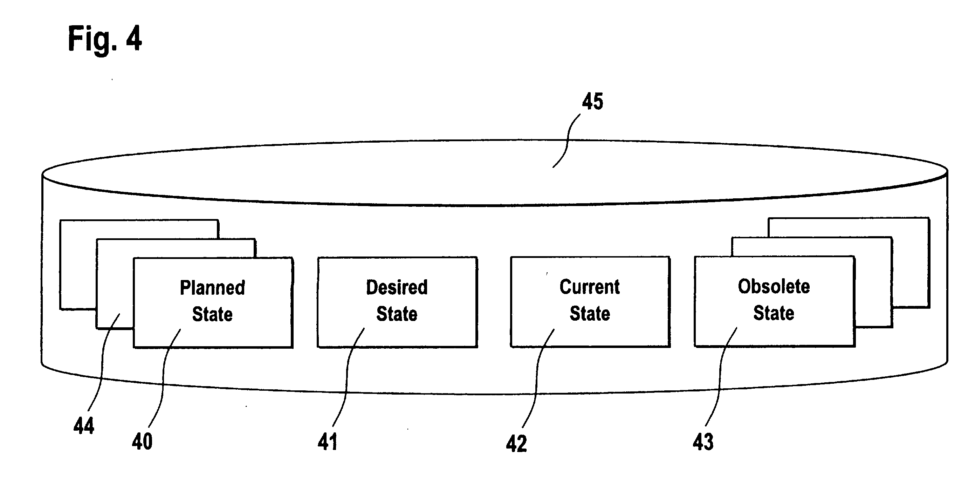

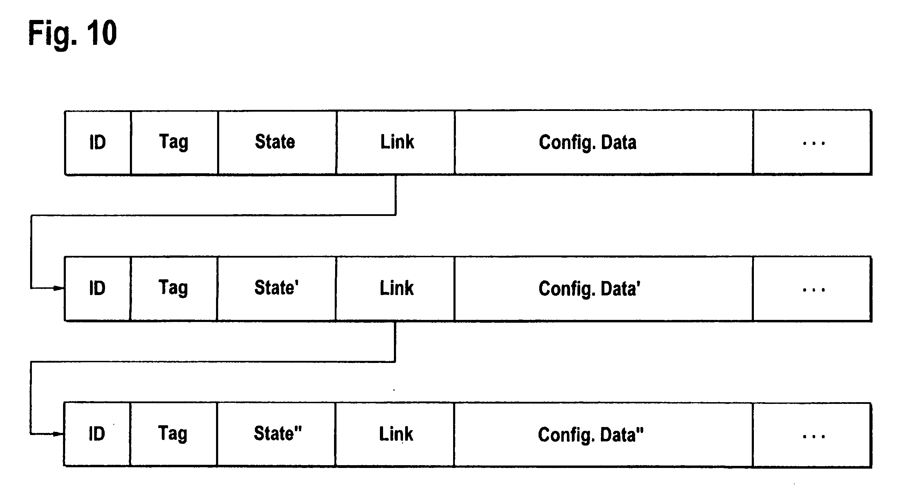

Fig. 4 shows possible configuration states 40 - 43 of a managed element 44 according to the invention. The configuration states 40 - 43 are stored in an above described database 45 as multiple rows that are linked together as illustrated in Fig. 10. The configuration of each element 44 can exist in the following more detailed states:
Planned:
   This represents a new element that has not yet been applied to an IT device or system. For example, an item of software that one intends to install in two weeks. (This status cannot apply to read-only hardware inventory or software inventory elements.)
Desired:
   This represents a 'planned' element that is being attempted to make current. For example, an item of software that will be installed at the next opportunity.
Current:
   This represents an element that applies to the IT device or system at the moment. For example, an item of software that is currently installed on the device.
Obsolete:
   This represents an element that was 'current', but that has now been replaced or removed. For example, an item of software that has been removed from the system. The sequence in which configurations become obsolete for reference is stored.

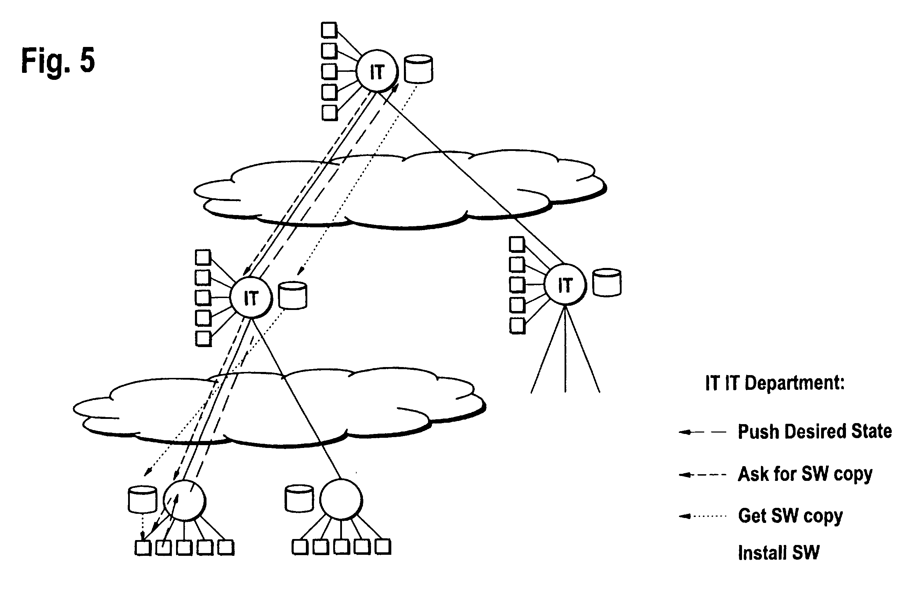

Fig. 5 shows an exemplary process for installing software on an IT device or system connected to an IT environment according to the invention. Hereby standard configurations using so-called "element types" are used. Element types represent for example an application package. These element types can be combined into larger units, the so-called "configuration set'. These sets represent a larger sub-system including the required configuration parameters. In order to define a complete system, a mechanism of a reference system is provided which is a virtual system from which real system can be configured. This is described later in more detail.

According to the invention, a state mechanism is used to model the IT environment and the desired changes. Instead of let an administrator define the individual steps, the final desired state of a configuration is just requested by a manager. The manager further determines by itself, how the state transition can be achieved. An administrator can only work on a private view basis in which he can manipulate objects and see the results on the database but without disturbing the real IT environment. The principal concept of configuration set modeling is to assign and deassign standard configurations from systems (= one or more data processing devices) - directly or indirectly.

The invention provides several ways and levels on which assignments and deassigments of configurations can be achieved. Assigning a configuration in case of a software is to install the software. Deassigning in this context means to uninstall the software. Hereby, also an element type can be assigned to an individual system, to a system group, or to all systems of a system group. Accordingly it can be assigned to all systems belonging to an IT resource site.

For non-element types of non-software category, links to the systems are created telling the these system may have elements of this type.
Assigning configuration sets will also copy elements of the configuration set to the systems.

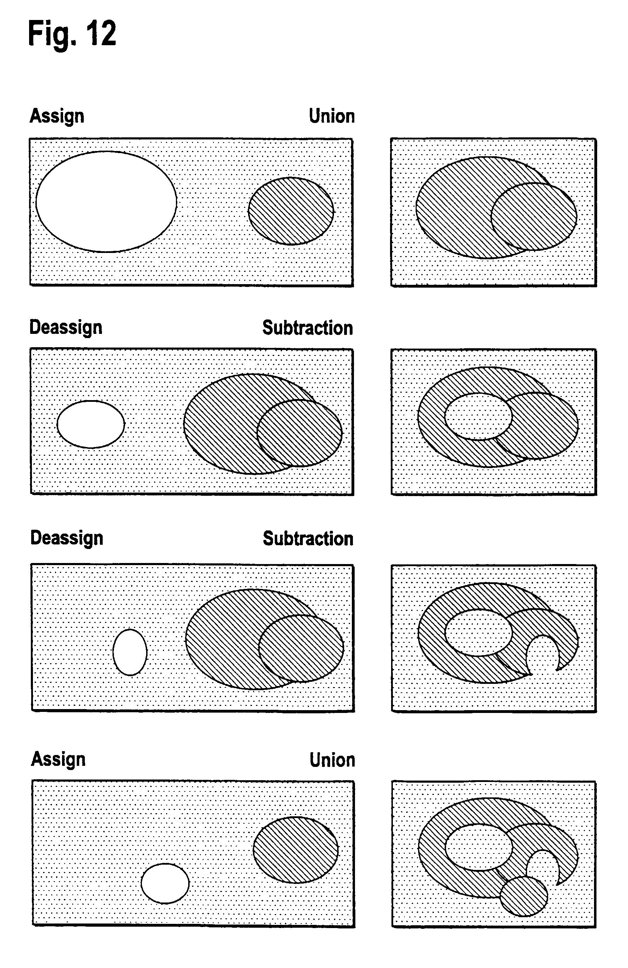

The results of these assignments and deassigments are stored in a manner which guarantees that these operations can be repeated multiple times to model a desired result. This information is stored along a so-called change request. The change request is a kind of logical container for desired changes. This mechanism helps to handle a huge amount of configurations by building unions and subtractions. The system is able to determine redundant information in the case of unions, e.g. install software on all system on which the software is not already installed, or remove software where it is installed. Exemplary unions and subtractions are depicted in Fig. 12.

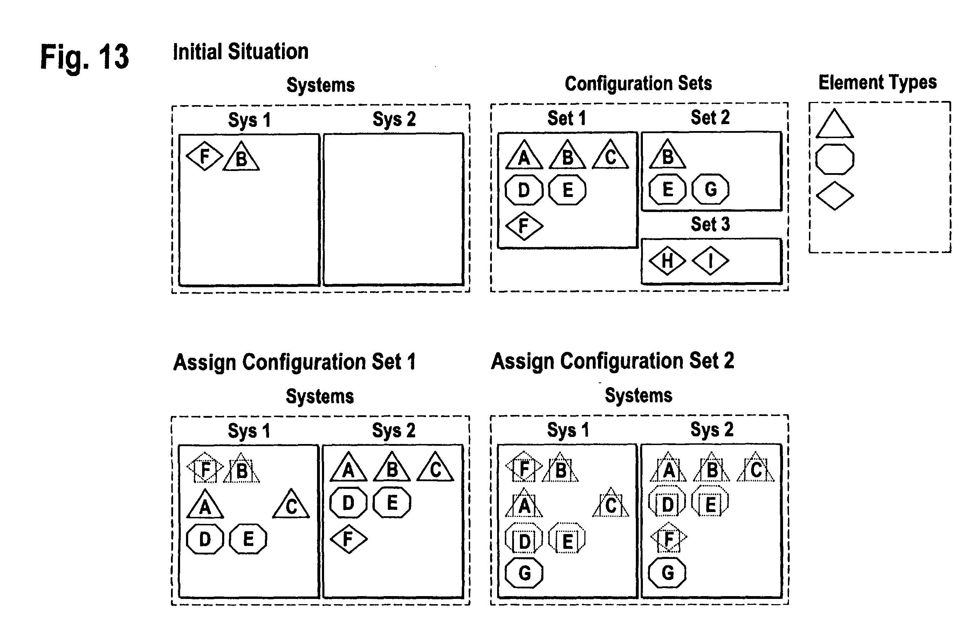

The same mechanism is available for other standard configurations like configuration set. Possible targets for assignments are Systems, System Groups, and Sites. Therefore, by combining those operations, the administrator can build a very complex selection that may be required to define a new management model. Exemplary assignments are shown in Fig. 13.

Once the administrator is satisfied with the changes, the changes are confirmed and updated within the change request.
Before executing the associated changes, it is possible to verify the desired changes by database queries, e.g. for consistency checks. In case of problems, the change request can be reopened and modified according the needs. Once all the changes are verified, the automatic execution of the changes is started that provides an automatic updating of the respective resources of the managed IT environment. If the administrator is not satisfied at all it is possible to discard all changes.

Utilizing intelligent agents implies a high scalability of the entire management solution. Each agent can work independent from each other. This allows spreading the work down to all agents and letting them determine the required actions by making a desired - current analysis and initiate the actions. For example, software is installed by telling the agent that the software must be available and installed on the system. The agent will check whether the software is already installed on the system or whether it has to be installed. It will organize a copy of the software by asking its parent agent in the IT environment hierarchy to get the software. Once a node up in the hierarchy has the software, the software will be recursively copied down the hierarchy. Once the software is available, the agent will initiate the installation process of the software on the system. The above procedure is illustrated in detail referring to Fig. 5 which shows only a part of the entire IT network depicted in Fig.1.

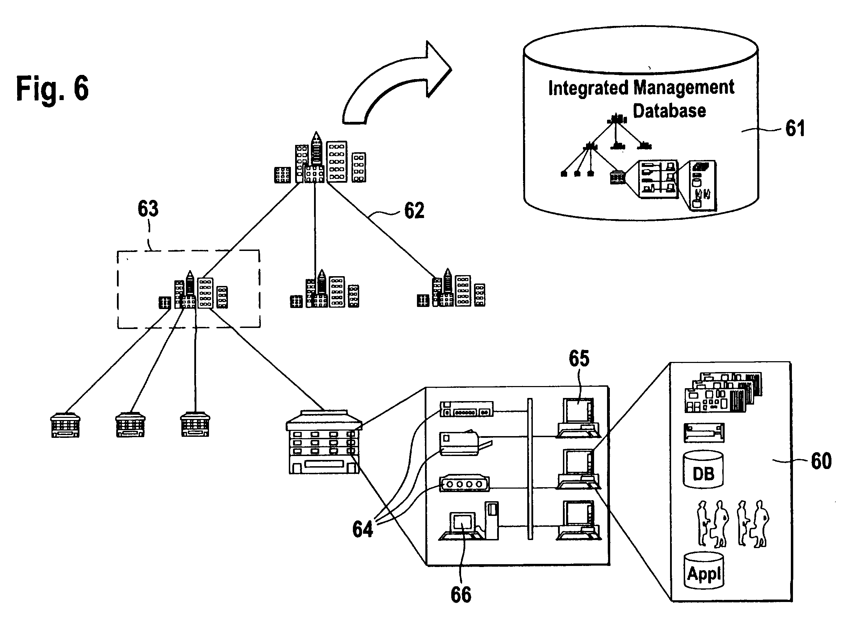

Fig. 6 shows an embodiment of a database containing the configuration of managed elements 60, in accordance with the invention. Hereby the desired state concept is built up using an above-described management database 61. This database contains a model i.e. view of the real customer environment comprised of a IT network 62, IT systems 63 located at sites (nodes) of the network 62, with e.g. a city company branch of a widely spread company, which comprises IT devices 64 each having corresponding agents 65. Further a predescribed agent is implemented in a server 66. The managed elements 60 represent systems, users, applications and other elements that have to be managed. In addition to these elements, the database 61 has also to contain the information about where the systems are located and how they relate to each other. The database contains the configuration information of each managed element 60, as it is required in the desired state concept. This means that the user know all time in which way the element of his environment are configured.

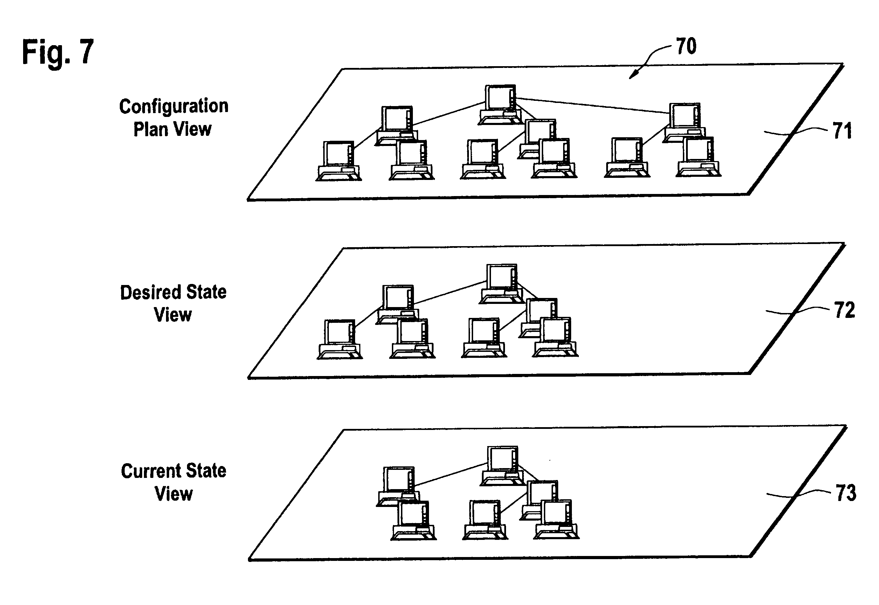

Fig. 7 shows virtual layers of an IT environment for supporting management of the configuration of IT devices or resources according to the configuration states 71 - 73 shown in Fig. 4. A map 70 of the complete IT environment is modeled in a predescribed configuration management database. On one side, this map 70 includes the site hierarchy and group information concerning IT equipment like the respective offices; on the other side, it contains information about each IT device or system, and its managed elements like printers, modems, devices, applications and users.

Configuration Packages are the smallest managed units within the definition of standard configurations. Configuration packages represent a specific kind of configuration that will be applied to IT devices or systems. The system associated configuration packages to so-called categories. Each category defines a kind of meta class that is used to determine the associated configuration tool. Today it is differentiated between three categories of configuration packages:
Software Configuration Package
Hardware Inventory Configuration Package
Software Inventory Configuration Package

A Software Configuration Package is a package that combines the configuration information in the form of Element Types (e.g. parameters) and the Software Package (software bits) itself. An Office Suite including a word processor, a spreadsheet program, etc. is an example of such a software configuration package. Hardware Inventory Configuration Packages contain the information which hardware inventory should be collected and how it is collected. Software Inventory Configuration Packages contain the information which software inventory should be collected and how it is collected, e.g. which file must be found to identify that a software is installed on a system.

Element types represent software applications, operating systems, patches, service packs, device drivers. Each element type is associated with a software package that contains the required images and installation scripts. Once the administrator has defined the element types they can be used to construct other modeling elements like configuration sets and reference systems.

A (managed) element is defined as configurable entity. Elements are the things which can be found on systems and present the existence of a managed element like software. The state of an element is reflected in its parameters and the state of the associated software package. Default values can be defined for parameters. A configuration is changed either when a parameter value has changed or when the software package has changed.

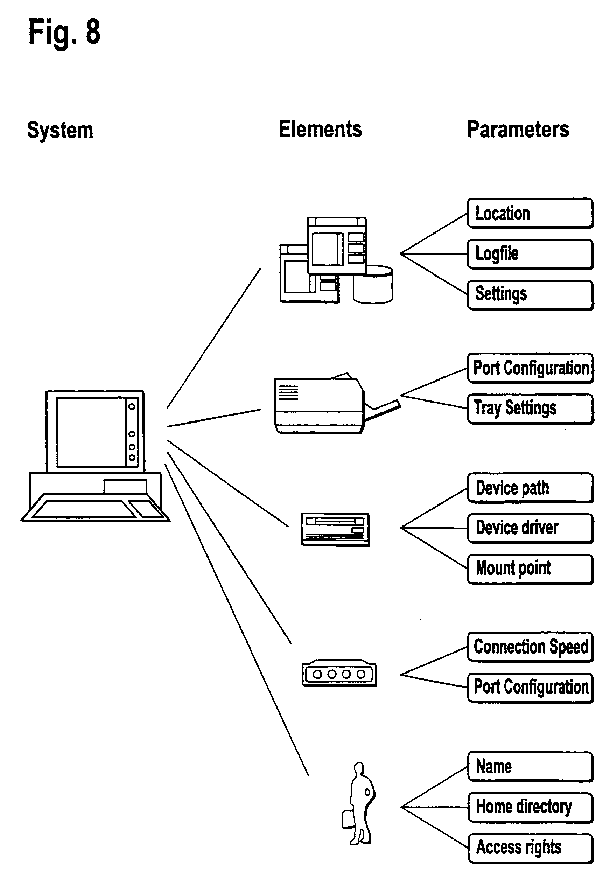

Once the element types are defined the administrator can combine them to configuration sets. These sets are used to define pre-configured sub-systems that can later be used to configure a system. The relation between element types and configuration sets will be described later referring to Fig. 8.

The invention advantageously allows for providing systems groups which are collections of systems from different sites. For example, all the database servers in an organization can be grouped together in order to enable working on systems from different sites all at once, rather than individually. Each system group can hereby exist within a particular environment.
Systems can belong to more than one system group. For example, the same system could exist in two system groups called 'Web Servers' and 'Mail
Servers'.

In accordance with the invention, a so-called Change Request is provided in order to group configuration changes. When a user wants to change the configuration of any object, he has to create a new Change Request or editing an existing one. Even, adding a new system is a part of a Change Request. A Change Request allows the user to track the planned changes for the managed environment. All changes he applies to elements will be attached to the current plan. Once the user has decided to put the changes into the managed environment, he only needs to specify the plan.

Each operation that makes changes in the database requires specifying a Change Request. In the cases, where an existing element will be changed, a new version dedicated for the current configuration plan will be generated. The results of the operation are only visible when the Change Request is used. When the changes should be applied to the physical environment, a Change Request will be executed.

Change Requests are used to build up a view into the managed IT environment. In comparison to other management application where the administrator must define the actions and the individual steps for managing an IT environment. Hereby the administrator is requested to define the desired end-state of the managed element. Using a Change Request the administrator works in a kind of virtual IT environment where he can see the final state of the required changes excluding all the intermediate steps required to perform the state transitions.

Fig. 8 is a schematic illustration of the above described relationship between systems, elements and parameters of elements according to the invention.

Looking on a more detail level, it is now described how the database is used in accordance with the invention to know all the configuration of the managed environment. First a system is defined as a kind of list that holds element that we have to manage. Thousands of systems can advantageously be handled since this information is stored in the database. In addition to the system, a structured way is needed that allows the user to navigate through his environment. This structure way is the hierarchy information of the environment telling the user where which system is located.

The elements that one can find on a system have also to be available in the database. Therefore, one has to define a way to represent any managed element that we can find in such environments. Looking more detailed on these elements, each element has a name that identifies it, a description that tells the user what is does, and of course it has parameters that defines how the element works. All this is illustrated in Fig. 8.

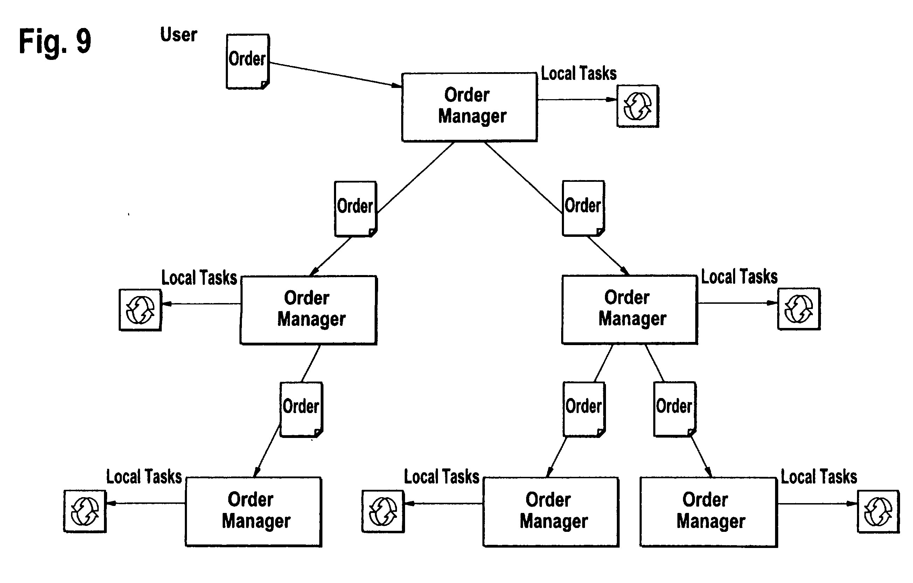

Up to now it is described how a configuration of a system and its elements is generated and used to navigate through an entire IT device or resource, e.g. a computer system. Nevertheless, one major part is how a future configuration of a system and its elements can be achieved. This is now illustrated referring to Fig. 9 which is a block diagram showing an order management for distributing software within an IT environment, in accordance with the invention.

When a current configuration situation is analyzed, a required functionality and thus potential configuration change can be fixed. On a high level, one can interpret all operations for changing a configuration as a kind of an order or a request. The user sends a request to the system to perform a specific operation, e.g. distribute software to a group of systems. In order to gain a high scalability the management of these orders is distributed and organized in a hierarchical way. This means, that the order is first sent to a top-level order manager. This manager determines which operations or tasks need to be done on the local system. For the other operations, new orders are generated and sent down to the next level of order managers. This procedure is repeated until all orders are translated into tasks. Fig. 9 illustrates this mechanism. The user sends an initial order to the top-level order manager. This manager determines local tasks and sends new orders to the next level of managers. In general, the order manager provides methods to plan, control and execute tasks on remote systems.

As mentioned before the distribution control is based on orders. The following section explains both terms in more detail. An order represents information about an action that has to be performed on the target systems and can be considered as a request. It contains only information concerning the request without to say how it has to be executed. The orders are represented as so-called request orders. A request order contains only data; it does not provide any management capability. Each request order will have an associated working order. Of course, the request order has the knowledge how to get its associated working order. The request orders are the programmatic interface for client application to work with the order management. The hierarchical topology is handled by the order management system including collection and consolidation of status feedback information from sub orders. This avoids to flatten the control information that is send back to the initiator. The working order is takes over the required work of an associated request order. The order management system will create these working orders as soon as the associated request order needs to be processed. The order management system is responsible for transferring the request orders and their associated feedback information up and down the hierarchical topology. It also manages possible dependences between several request orders.

Fig. 10 depicts an embodiment of the above-described database with configuration change tags referencing configuration changes. Each configuration is hereby represented by at least two database entries with at least one tag and at least two states. It comprises an ID bit which, if identical for two entries, signalizes a same managed element. The tag includes information about the configuration change context, i.e. who has changed what element. A state can be a current state (state) or a desired state (state'). In case of two different states, the configuration data likely will also differ. These entries are used for both IT resources and IT environment data models.

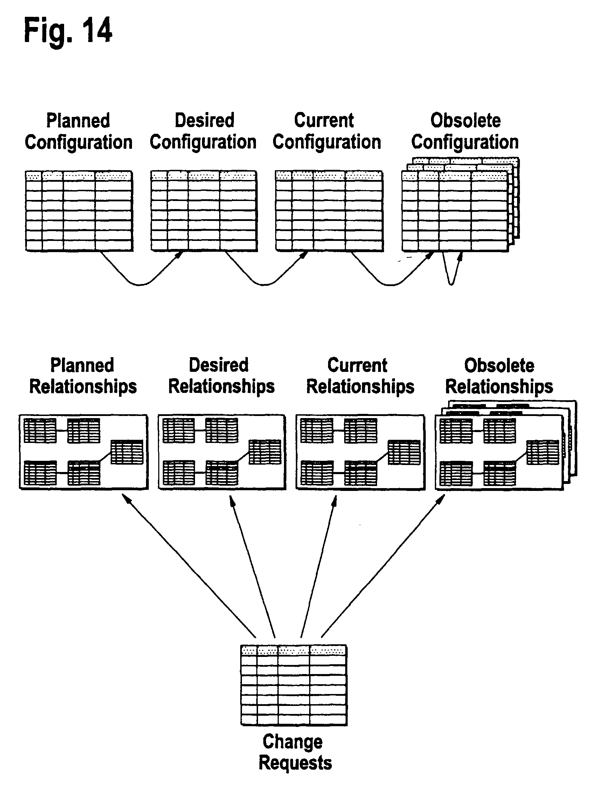

The system keeps track about the various states of configuration as illustrated in Fig. 14. The central role is the so-called change-request that allows linking the different changes together and therefore having the possibility to plan, prepare and execute changes in a controlled way including the storage of history information without losing any relational information.

## Claims

1. System for managing the configuration of data processing devices (31, 64) arranged distributedly within an hierarchical, particularly tree-like, data processing network (1), wherein the data processing devices (31, 64) comprise data processing resources (60) represented by managed elements,
**characterized by**
managing means (2) arranged distributedly within the data processing network (1) for handling the configuration, particularly configuration changes, of the managed elements whereby utilizing configuration information for the managed elements;
database means (5) arranged distributedly in accordance with the managing means (2) for storing the configuration information;
agent means (3) arranged distributedly in accordance with the data processing devices (31, 64) for retrieving the configuration information for the corresponding data processing devices (31, 64) from the database means (5) and from the data processing devices (31, 64).

2. System according to claim 1, characterized by database means (5) for storing configuration information of the data processing devices (31, 64) at the respective site (parent site) in the network hierarchy and all sub-sites (children sites) and for storing configuration information of the relationships between the data processing devices.

3. System according to claim 1 or 2, characterized by database means (5) for storing configuration information of the data processing devices (31, 64) including time-dependent configuration history information.

4. System according to claim 2 or 3, characterized in that the database means (5) is represented by a relational database.

5. System according to one or more of the preceding claims, characterized by agent means (3) for retrieving the configuration information of managed elements from the database means (5) and from the data processing devices (31, 64) and for synchronizing the configuration information in the database means (5) with the configuration of the data processing devices and vice versa.

6. System according to claim 5, characterized by means (20) for adapting the data processing devices (31, 64) with their representation in the database means (5) and vice versa.

7. System according to one or more of the preceding claims, characterized by agent means (3)
for building up at least two configuration information containers for the managed elements, a first one (42) for storing a current state of the configuration and at least a second one (41) for storing a desired state of the configuration, whereby storing the configuration containers locally at the agent means, and
for determining configuration changes of the managed elements using the at least two configuration information containers (41, 42).

8. System according to one or more of the preceding claims, characterized in that the distributed database means (5) provide a container of all currently managed elements including information about deleted managed elements (19), new managed elements (22) and changed managed elements (27).

9. System according to one or more of the preceding claims, characterized in that the configuration information is stored in a structural manner corresponding to the hierarchy of the data processing resources by using hierarchy information.

10. System according to one or more of the preceding claims, characterized in that the configuration information is including attributes for each of the managed elements (Fig. 10).

11. System according to one or more of the preceding claims, characterized in that detecting configuration changes is accomplished by delta detection (Fig. 2), particularly by means of comparing the attributes of each of the managed elements.

12. System according to one or more of the preceding claims, characterized in that the managed elements are stored into and retrieved from the database means (5) by using an enumerator over all managed elements.

13. System according to one or more of the preceding claims, characterized by providing pre-defined configuration sets (Fig. 13) for particular types of managed elements.

14. System according to one or more of the preceding claims, characterized by providing a reference model of the data processing resources (60) containing a valid combination of element types for the managed elements.

15. System according to one or more of claims 10 to 14, characterized by the following decision tree for handling configuration changes of the managed elements:
if matching attributes then remove corresponding elements from current element container;
if different attributes then put corresponding element on change element container and delete from current container;
if element not in container then put on new element container.

16. System according to one or more of the preceding claims, characterized by configuration states comprising at least two of the types "planned", "desired", "current", and "obsolete" for the managed elements.

17. System according to one or more of the preceding claims, characterized in that the agent means (3) provide a local storage (8) for storing information about a current configuration of the managed elements.

18. System according to one or more of the preceding claims, characterized in that the agent means use the computing power of the corresponding data processing devices (31, 64) and/or data processing resources (60).

19. System according to one or more of the preceding claims, characterized in that the agent means (3) order a copy of a data processing resource (60), in particular a piece of software, needed for the change of configuration, from its parent agent in the hierarchy of the agent means.

20. System according to one or more of the preceding claims, characterized in that the managing means (2) being managing tasks of the agent means (3).

21. System according claim 20, characterized in that the managing means (2) determine whether to perform a configuration change task locally or to delegate the task to a next level in the hierarchy of agent means (3).

22. System according to one or more of the preceding claims, characterized in that the managing means (2) conduct an hierarchical order management (Fig. 9).

23. System according to one or more of the preceding claims, characterized in that providing configuration change tags (Fig. 10) referencing configuration changes of the managed elements.

24. System according to one or more of the preceding claims, characterized in that the configuration of the managed elements is represented by at least two database entries (Fig. 10) corresponding to at least two different configuration states.

25. Method for managing the configuration of data processing devices distributed hierarchically, in particular tree-like, within a data processing network, whereby the data processing devices comprise data processing resources represented by managed elements, in particular, such a method for use in a system according to one or more of the preceding claims,
**characterized by**
recording planned configuration state changes of managed elements in a first step and
executing the configuration changes, based on the planned configuration state changes, in a second independent step.

26. Method according to claim 25, characterized by executing a verification on the validity of the planned configuration state changes prior to executing the configuration changes.
